# EUROPEAN PATENT APPLICATION

(11) **EP 4 571 393 A1**
(43) Date of publication of application: **18.06.2025**
(21) Application number: 24219660.8
(22) Date of filing: 13.12.2024
(51) Int. Cl.: G02B 27/01

(54) **DIRECT DISPLAY WITH FOLDING BACKLIGHT FOR HEAD UP DISPLAY**

(30) Priority: 14.12.2023 US 202363610144 P
(71) Applicant: N.S. International, Ltd., Troy, MI 48084 (US)
(72) Inventor: Wagle, Saumil Satish, Dearborn (US); Gupta, Indrajeet, Troy, MI (US); Krishna, Arul, West Bloomfield, MI (US)
(74) Representative: Forresters IP LLP

(57) **Abstract**

A direct display with folding backlight for a head up display (HUD) of a vehicle, comprises a picture generation unit (PGU) and a freeform mirror. The PGU comprises a backlight unit (BLU), a display, and an internal fold mirror. The BLU produces a backlight which is reflected off the internal fold mirror to project an image onto the display, before reflecting off a freeform mirror onto a windshield. Absence of an external fold mirror, and inclusion of the internal fold mirror, facilities an orientation of the PGU that is conducive to a decreased HUD size, a decreased back focus, and increased magnification of the image. The display orientation is optimized such that sunlight reflected onto the display is reflected below the freeform mirror, preventing the sunlight from reflecting into a user's eye. The display has a high resolution, ensuring that the image can be magnified without becoming pixelated or "grainy."

## Description

### TECHNICAL FIELD

The present disclosure relates generally to the field of head up displays (HUD). More specifically, the present disclosure relates to a HUD direct display with a folding backlight.

### BACKGROUND

The use of a head up display (HUD) in vehicles is known in the art. A HUD is a means of projecting or reflecting an image directly into a user's visual field so that a vehicle driver can quickly and easily acquire information such as, but not limited to, speed, navigation assistance, engine performance, and operating conditions, without directing the driver's attention away from the road. In some instances, the HUD projects the image in such a way as to overlap a background scene without interfering with the driver's view of the background scene. In automobiles, this generally means that information contained in the image is projected onto a portion of a vehicle's windshield in a semi-transparent manner.

Traditionally, HUD assemblies include a picture generation unit (PGU), which generally comprises a display and a backlight unit (BLU), a fold mirror, and a freeform mirror. The distances from the PGU to the fold mirror, from the fold mirror to the freeform mirror, and from the freeform mirror to the windshield, are collectively referred to as the back focus. The PGU produces an image that is reflected along the back focus, off the fold mirror and the freeform mirror, and onto the windshield of the vehicle. The curvature of the freeform mirror, in collaboration with the curvature of the windshield, can magnify the image displayed on the windshield up to five and a half times the size of the image produced by the PGU. Magnification of the HUD image can also be achieved by reducing the back focus.

Reduction of the back focus results in a smaller distance between components of the HUD assembly, and thereby also allows for a smaller HUD. However, reduction of the back focus distance is limited by the need to reflect the image off the fold mirror and the freeform mirror before the image is reflected onto the windshield. Traditionally, the fold mirror and freeform mirror are separate, or external, from the PGU. The inclusion of these external components limits the amount by which the back focus can be reduced, thereby limiting the ability to magnify the image reflected on the windshield. The need for an external fold mirror and freeform mirror also results in large HUD assemblies that can be obstructive or prohibitive when installing the HUD package in a dashboard of a motor vehicle. Because vehicle dashboards house other important components of the vehicle, space within the dashboard is limited; the spatial constraints for a HUD assembly within the dashboard of the vehicle is typically 7-8 L. As a result, consumers and manufacturers are demanding HUD packages that fit within this spatial limitation.

Accordingly, there is an unmet need for a HUD assembly that can fit within the spatial constraints of a typical vehicle dashboard (HUD assemblies with a volume less than 7 L) while also meeting image requirements equal to or greater than those of traditional HUD assemblies, thereby resolving the foregoing problems in the prior art.

### SUMMARY

The present disclosure provides a direct reflection system for a head up display (HUD) for use in a vehicle, wherein the HUD comprises a direct display with a folding backlight. Specifically, the current disclosure relates to an improved HUD comprising a PGU and a freeform mirror, wherein the PGU comprises a backlight unit (BLU), a display, and an internal fold mirror integrated into the PGU between the BLU and the display. The BLU produces a backlight which is reflected off the internal fold mirror to project an image onto the display. The image is then reflected off the freeform mirror onto a reflective target surface such as a windshield. Preferred embodiments do not utilize an external fold mirror separate from the PGU. Removal of the external fold mirror, and inclusion of a smaller internal fold mirror into the PGU, allows the PGU to be repositioned relative to the freeform mirror within the HUD assembly, thereby facilitating the ability to decrease the size of the HUD while also decreasing a back focus and increasing magnification of the image reflected onto the windshield. Preferred embodiments can maintain a HUD volume that is less than 7 L while achieving magnification of a perceived image that is over six times that produced by the PGU. In some instances, the image displayed on the windshield can be up to 7.5 times larger than the image produced by the PGU, with a HUD volume of 5.5 L.

In some embodiments, the angle and position of the display, in relation to the freeform mirror, is optimized such that sunlight that is reflected off the freeform mirror onto the display is reflected back off the display in a downward trajectory. In preferred embodiments, sunlight reflected off the display is directed below the freeform mirror. This ensures that the sunlight is not reflected back onto the freeform mirror and thence to the windshield and into a user's eyes. In preferred embodiments, the freeform mirror and display are positioned 176 mm apart, and the display is tilted at an angle α1 from a central ray path, where angle α1 is least 15°.

In some embodiments, the display of the improved HUD has a high resolution to accommodate the shorter back focus created by removal of the external fold mirror and inclusion of the internal fold mirror into the PGU. Thus, preferred HUD assemblies may utilize a smaller display, with a pixel resolution that is greater, per square millimeter, than those used in traditional HUD assemblies. This high pixel count ensures that the number of pixels in the image exhibited on the display is increased, ensuring that the image can be magnified when reflected onto the windshield without the image becoming pixelated or "grainy." This ability to increase the magnification allows for further reduction of the back focus, which in turn allows for a smaller, more compact HUD.

A preferred embodiment of the present invention comprises:
A head up display (HUD) system for use in a vehicle, the HUD comprising:
a picture generation unit (PGU), the PGU comprising:
   a backlight unit (BLU);
   an internal fold mirror; and
   a display;
a freeform mirror; and
a light pathway defined by the PGU and the freeform mirror;
wherein the HUD is configured to transmit light along the light pathway;
wherein when light is transmitted along the light pathway, the light emanates and is transmitted from the BLU to the internal fold mirror, then from the internal fold mirror to the display, and then from the display to the freeform mirror.

Another preferred embodiment of the present invention comprises:
A head up display (HUD) system for use in a vehicle, the HUD system comprising:
a picture generation unit (PGU), the PGU comprising:
   a backlight unit (BLU),
   an internal fold mirror; and
   a display comprising an orientation angle;
a freeform mirror, and
a light pathway having antegrade and retrograde directions and being defined by the PGU and the freeform mirror;
wherein the internal fold mirror is positioned along the light pathway between the BLU and the display;
wherein when an antegrade light is transmitted along the light pathway, the antegrade light emanates and is transmitted from the BLU to the internal fold mirror, then from the internal fold mirror to the display, and then from the display to the freeform mirror;
wherein the orientation angle of the display permits the antegrade light to travel in the antegrade direction along the light pathway from the internal fold mirror to the freeform mirror, and wherein the orientation angle of the display prohibits a retrograde light from traveling from the display to the freeform mirror.

### BRIEF DESCRIPTION OF THE DRAWINGS

The invention will be more fully understood by referring to the following Detailed Description of Specific Embodiments in conjunction with the Drawings, of which:
FIG. 1 is a perspective view of a head up display (HUD) assembly, provided in accordance with the prior art.
FIG. 2 is a schematic of the HUD assembly of FIG. 1, provided in accordance with the prior art.
FIG. 3 is a schematic view of a HUD assembly excluding an external fold mirror, illustrating a problem solved by embodiments provided in accordance with the current disclosure.
FIG. 4 is a schematic illustrating reflection of sunlight along a light pathway in the HUD assembly of FIG. 3, illustrating a problem solved by embodiments provided in accordance with the current disclosure.
FIG. 5 is a perspective view of components within a traditional picture generating unit (PGU) utilized in a HUD, provided in accordance with the prior art.
FIG. 6 is schematic of a HUD assembly provided in accordance with an embodiment of the current disclosure.
FIG. 7a is a perspective view of components within a PGU utilized in the HUD of FIG. 6, provided in accordance with an embodiment of the current disclosure.
FIG. 7b is a perspective view of components within a PGU utilized in the HUD of FIG. 6, provided in accordance with an embodiment of the current disclosure.
FIG. 8 is an exploded view of components a PGU utilized in the HUD of FIG. 6, provided in accordance with an embodiment of the current disclosure.
FIG. 9 is a schematic illustrating a field of view (FoV) of a perceived image in relation to a user, provided in accordance with embodiments of the current disclosure.
FIG. 10 is a schematic illustrating reflection of sunlight along a light pathway in a HUD assembly, provided in accordance with an embodiment of the current disclosure.
FIG. 11 is a perspective view illustrating a positional and rotational relationship between a freeform mirror and a PGU display utilized in a HUD assembly, provided in accordance with an embodiment of the current disclosure.

### DETAILED DESCRIPTION OF SPECIFIC EMBODIMENTS

Embodiments of the present disclosure relate generally to an improved direct reflection system for a head up display (HUD). The present disclosure describes, in detail, specific embodiments with the understanding that the present invention may be susceptible to embodiments in different forms, and that the present disclosure is considered an exemplification of the principles of the invention and is not intended to limit the invention to that described herein.

As used in this disclosure, the term "dashboard" and "dash" may be used interchangeably to refer to a panel of a vehicle that is facing a driver and which contains instruments or controls of the vehicle. Furthermore, the terms "longitudinal" or "fore-aft direction" refer to an orientation extending towards a front or forwardmost side of the vehicle at one end, and towards a rear, or aft, end of the vehicle at another end. The term "user" may designate a driver or a passenger of the motor vehicle, and the terms "user" and "driver" may be used interchangeably to refer to a person within a passenger compartment of the motor vehicle to whom an image exhibited by the HUD is visible. The terms "freeform mirror" and "free form mirror" are used interchangeably to refer to a mirror with a non-symmetrical optical surface.

Generally, a HUD is a means of projecting an image directly into a user's visual field in such a way as to overlap a background scene without interfering with the user's view. In vehicles such as a car, truck, or other automobile, this generally means that information contained in the image is projected onto a target surface, such as a portion of a vehicle's windshield or other suitable reflective surface, in a semi-transparent manner so that a driver can quickly and easily acquire information such as, but not limited to, speed, navigation assistance, engine performance, and operating conditions, without directing the driver's attention away from a road or other background.

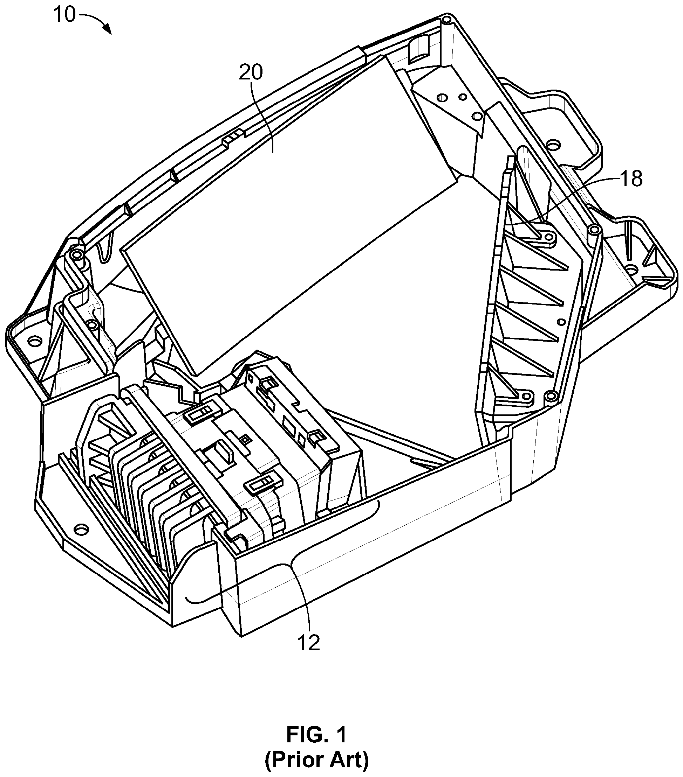

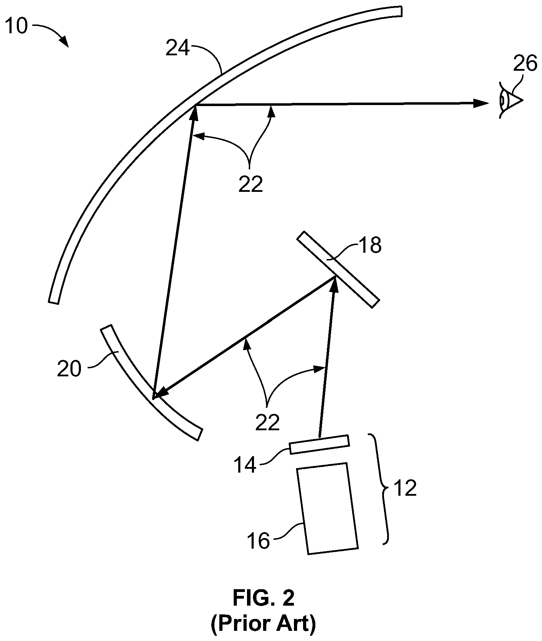

Traditionally, as seen in FIG. 1, a HUD assembly 10 includes a picture generation unit (PGU) 12, an external fold mirror 18, and a freeform mirror 20. As shown in FIG. 2, the PGU 12 generally comprises a display 14 and a backlight unit (BLU) 16. Light produced by the BLU 16 is exhibited as an image on the display 14. The image is then reflected antegrade along a light pathway 22 from the display 14, to the external fold mirror 18, and thence to the freeform mirror 20, before being reflected off the windshield 24 or other suitable reflective surface, where it is visible to a user's eye 26. The external fold mirror 18 reflects the light produced by the PGU 12 at an angle and 'folds,' or bends the light pathway 22 such that the light can then reflect off the freeform mirror 20 onto the windshield 24. The distance that the light travels along the light pathway 22, from the PGU 12 to the windshield 24, is referred to as the back focus. In traditional HUDs, the curvature of the freeform mirror 20, in collaboration with the curvature of the windshield 24, can magnify the image displayed on the windshield 24 up to five and a half times the size of the image produced by the PGU 12. The amount by which the image can be magnified is determinant on a length of the back focus, with a smaller back focus resulting in higher magnification.

In traditional HUD assemblies 10, the external fold mirror 18 bends the light pathway 22 and thereby provides flexibility in the placement of the PGU 12 with respect to other components of the HUD 10, such as the freeform mirror 20. In other words, the inclusion of the fold mirror 18 allows a HUD 10 to be assembled in such a way that the PGU 12 does not have to be placed in a linear line with the freeform mirror 20.

The freeform mirror 20 typically magnifies the image projected from the PGU 12 and corrects optical aberrations caused by a curvature of the windshield 24 upon which the image is ultimately displayed. Because windshields 24 in vehicles are typically curved, an image produced by the PGU 12 would be distorted if reflected directly onto the windshield 24. The freeform mirror 20 is thus typically curved inversely to the windshield 24 and can have multiple or varying curvatures (hence the name "freeform") that magnify and distort the image produced by the PGU 12. As a result, the image appears flat when reflected off the windshield 24.

HUD assemblies 10 are typically housed within a dashboard of a motor vehicle. However, other vehicle components also need to be housed within the dashboard, and thus HUD assemblies 10 generally need to fit within certain spatial constraints. Although the available dashboard space may be variable depending on the type of vehicle, the space for HUD assemblies 10 within typical vehicles is generally between 6 and 13 L and is more commonly less than 6.9 L. Accordingly, a typical HUD 10 is typically less than 322 mm long, 160 mm wide, and 297 mm tall. These constraints often make it difficult to fit the various components of the HUD assembly 10 within the dashboard while still enabling reflection and magnification of the HUD image. Thus, in traditional HUDs 10, magnification is generally limited to less than 6 times the size of the image exhibited by the BLU 16. In most traditional HUDs 10, the magnification is limited to 5.5 times the size of the image exhibited by the BLU 16.

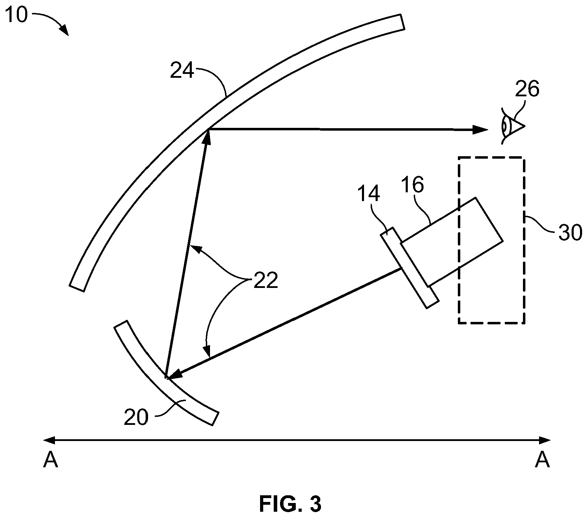

Traditionally, the external fold mirror 18 functions to position the PGU 12 in such a way that the HUD assembly 10 does not exceed these spatial constraints. By placing the PGU 12, the fold mirror 18, and the freeform mirror 20 in a triangular orientation, as illustrated in FIGS. 1 and 2, the light projected from the PGU 12 can reflect off the freeform mirror 20 without necessitating that the PGU 12 is positioned in linear relation to the freeform mirror 20 along a fore-aft direction A-A (see FIG. 3 for exemplification of such a linear orientation). In other words, the fold mirror 18 facilitates a bend, or fold, in the light pathway 22, allowing the HUD 10 to be more compact.

However, adding the external fold mirror 18 makes the HUD volume larger than it would be without the external fold mirror 18. Inclusion of the external fold mirror 18 also limits the amount by which the back focus can be reduced. This in turn limits the amount by which an image can be magnified before reaching the windshield 24. Thus, removal of the external fold mirror 18 can facilitate a smaller back focus and larger magnification of the image reflected on the windshield 24, while also decreasing an overall volume of the HUD assembly 10.

However, simply removing the external fold mirror 18 does not necessarily remedy the aforementioned issues, as illustrated in FIG. 3. When the external fold mirror 18 is removed, the PGU 12 must be repositioned so that the image exhibited on the display 14 can be reflected directly off the freeform mirror 20. This PGU 12 position results in a HUD assembly 10 with a smaller volume, but in one that ultimately extends further in the longitudinal, or fore-aft direction A-A, thereby infringing into space necessary for other dashboard components 30.

Moreover, removal of the external fold mirror 18 also results in a pixelated image reflected on the windshield 24. This is because removal of the external fold mirror 18 reduces the back focus, thereby increasing magnification of the image onto the windshield 24. Magnification of the image in turn means magnification of pixels on the PGU 12 display 14. As a result, an image surface on the display 14 is reflected over a larger space, resulting in a grainy, pixelated image reflected on the windshield 24.

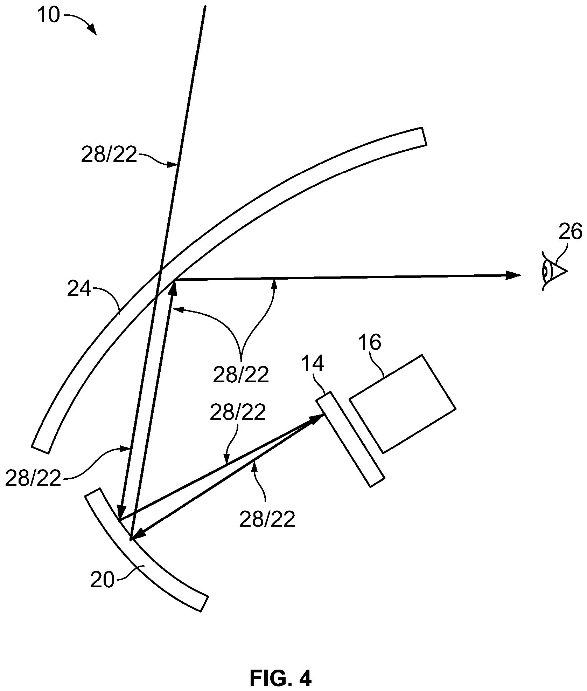

As seen in FIG. 4, repositioning the PGU 12 also exposes the display 14 to sunlight 28 that travels retrograde down the light pathway 22. In such instances, sunlight 28 which passes through the windshield 24 can reflect off the freeform mirror 20 onto the display 14. From there, the sunlight 28 can reflect off the display 14, back down the light pathway 22, into the user's eye 26. This can be annoying to the user and can be distracting and dangerous when the user is driving.

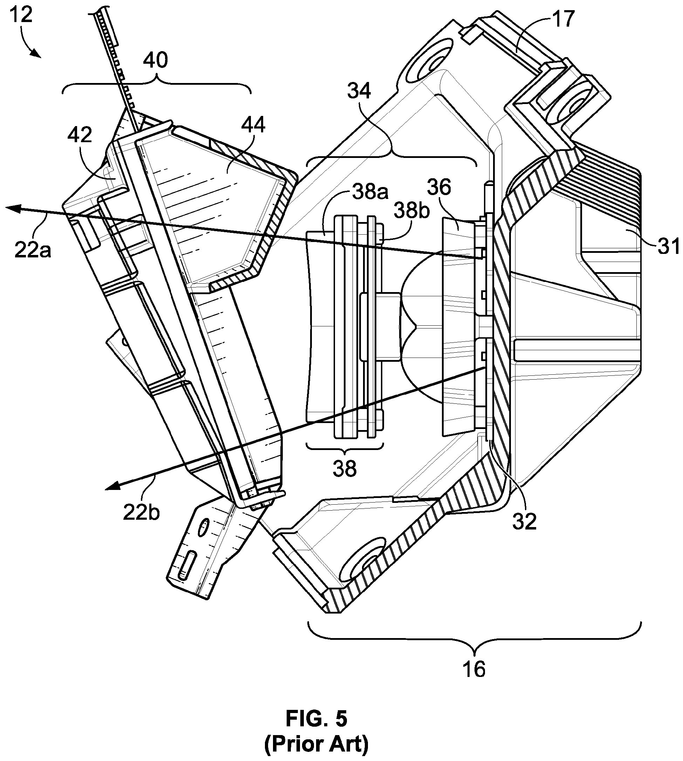

FIG. 5 illustrates components of the traditional PGU 12 in accordance with the prior art, which generally comprise a display assembly 40 and the BLU 16. FIG. 5 cross-sects a housing 17 of the BLU 16 to illustrate components of the BLU 16 typically found in traditional HUDs 10, including a heat sink 31, a light array 32, and a plurality of lenses 34. The plurality of lenses 34 traditionally include a condenser lens 36 and at least one lenticular lens 38, although typical HUD assemblies 10 often include at least a first lenticular lens 38a and a second lenticular lens 38b. The display assembly 40 typically comprises a display cover 42, and a display holder 44, which house the display 14 (not shown in FIG. 5). Traditionally, the condenser lens 36, lenticular lenses 38, and display assembly 40 are aligned along a straight axis such that outer parameters 22a, 22b of the light pathway 22 extend straight from the light array 32 through the plurality of lenses 34 to the display 14, without any reflection or refraction.

As noted *supra,* the fore-aft spatial constraints within which a HUD 10 must fit in traditional dashboards, as well as the necessity of including elements such as the external fold mirror 18, limit the amount by which a HUD volume may be reduced, as well as the amount by which the back focus may be reduced. These constraints also limit the amount by which an image may be magnified for exhibition on the windshield 24. As a result, in traditional HUDs 10, the back focus distance is typically between 420 and 530 mm, depending on type and size of vehicle, dashboard specifications, and desired field of view for the image on the windshield 24. This range reflects the fact that the amount of available dashboard space for a compact car is different than that of a large vehicle, as is the distance between the HUD 10 and the target surface windshield 24. Accordingly, some vehicles may require greater magnification than others, and thus require a back focus that is smaller than that necessary in other vehicles. On the flip side, some vehicles may not require as much magnification, but are smaller and thus have less space within which to fit the HUD 10. Thus, the relationship between image magnification and a possible image size reflected on the windshield 24 is variable based on vehicle size and special constraints.

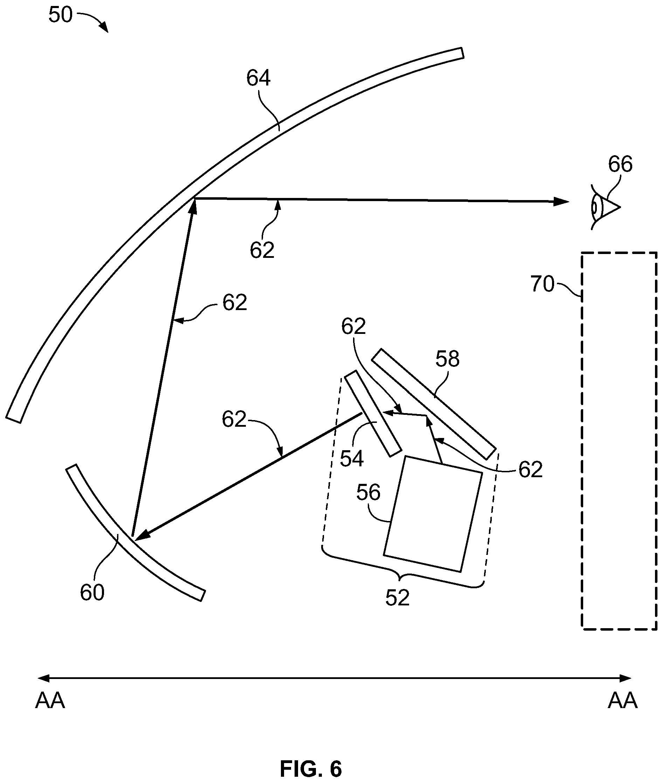

FIG. 6 is a schematic view of a HUD assembly 50 of a preferred embodiment in accordance with the current disclosure. The HUD assembly 50 preferably comprises a PGU 52, and a freeform mirror 60. The PGU 52 in turn preferably comprises a display 54, a BLU 56, and an internal fold mirror 58. The internal fold mirror 58 is preferably incorporated into the PGU 52 and is positioned along a light pathway 62 between the BLU 56 and the display 54. Inclusion of the internal fold mirror 58 facilitates a smaller HUD 50 than those that utilize an external fold mirror.

FIG. 6 illustrates the BLU 56, internal fold mirror 58, and display 54 as separate entities to illustrate their positional relationship, but in practice these elements preferably comprise components within a PGU 52 housing. The BLU 56 produces a backlight, which carries an image that is projected and reflected along the light pathway 62. Removing the external fold mirror 18 and incorporating the internal fold mirror 58 results in a back focus with a length that is preferably less than 490 mm. In preferred embodiments the back focus length is between 430- and 466-mm. In preferred embodiments, light that travels along the light pathway 62 may travel in an antegrade direction, from the BLU 56 towards the internal fold mirror 58, to the display 54, and thence to the freeform mirror 60 and ultimately to a target surface such as a windshield 64. In other words, antegrade light that emanates from the BLU 56 is transmitted to the internal fold mirror 58, where it is reflected to the display 54, exhibiting an image thereupon, which is then preferably reflected off the freeform mirror 60 to the windshield 64, where it is visible to a user's eye 66. Removal of the external fold mirror 18 allows the components of the HUD assembly 50 to be reorganized to decrease a size of the HUD 50, decrease a back focus, and increase a magnification of the image exhibited on the windshield 64. Inclusion of the internal fold mirror 58 between the BLU 56 and the display 54 thus allows reflection of the PGU 52 image directly off the freeform mirror 60, without the PGU 52 extending so far along an axis AA-AA, where axis AA-AA extends in a fore-aft direction towards other components 70 within the vehicle's dashboard. In other words, inclusion of the internal fold mirror 58 preferably facilitates placement of the PGU 52 such that the PGU 52 does not interfere with the other components 70.

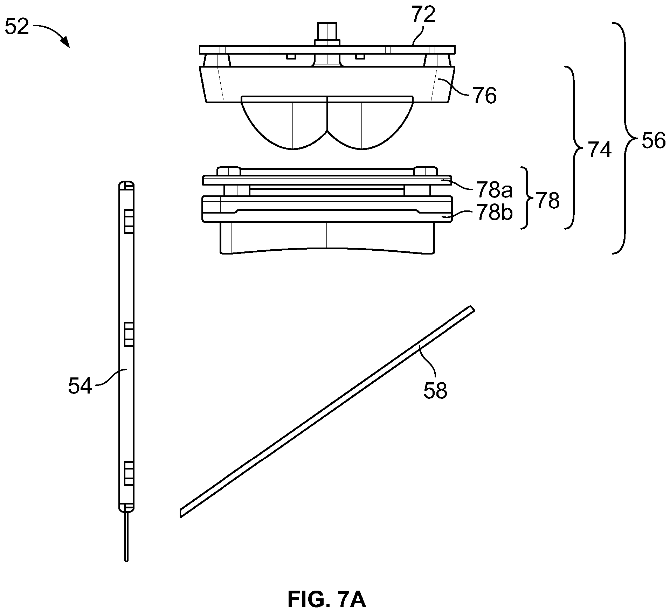

FIG. 7a is a schematic view of the PGU 52 in a preferred embodiment, wherein the BLU 56 comprises a light array 72 and a plurality of lenses 74. In one embodiment, the plurality of lenses 74 includes a condenser lens 76. In other embodiments, the plurality of lenses 74 includes at least one lenticular lens 78. In other embodiments, the plurality of lenses 74 includes a first lenticular lens 78a and a second lenticular lens 78b. In further embodiments, the plurality of lenses 74 includes at least one lenticular lens 78 and at least one condenser lens 76. However, in preferred embodiments, the plurality of lenses 74 includes the condenser lens 76, the first lenticular lens 78a, and the second lenticular lens 78b.

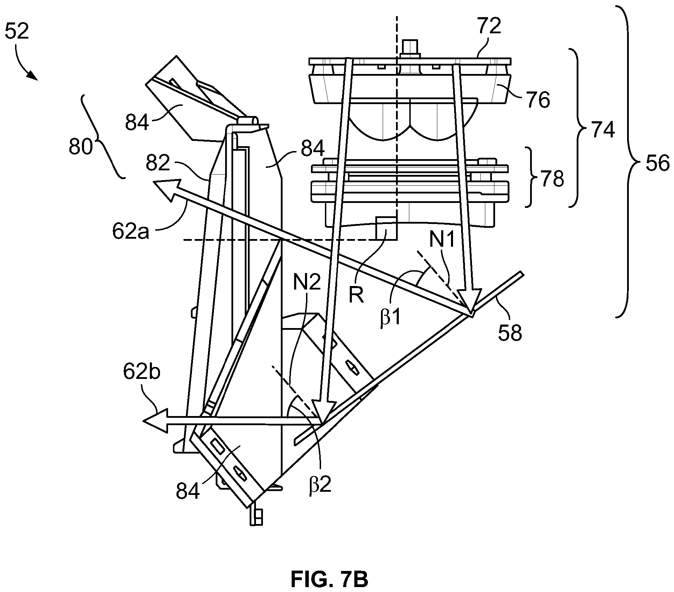

As shown in FIG. 7b, in some embodiments the PGU 52 additionally comprises a display assembly 80 comprising a display cover 82 and a display holder 84. The display cover 82 covers and protects the display 54 (not shown in FIG. 7b) from debris and any extraneous light, while the display holder 84 holds the display 54 in position within the HUD assembly 50 and is in turn preferably screwed into a HUD casing. Integration of the internal fold mirror 58 into the BLU 56 preferably allows the display 54 to be positioned perpendicularly to the plurality of lenses 74 and light array 72 at right angle R, although other angles between the display 54 and light array 72 are also contemplated. The internal fold mirror 58 is preferably positioned between the plurality of lenses 74 and the display 54 at a 45-degree angle, although other angles are also contemplated. Thus, the light pathway 62, with a first outer parameter 62a and a second outer parameter 62b, is preferably projected through the plurality of lenses 74, and is reflected off the internal fold mirror 58 onto the display 54, before it is preferably reflected off the freeform mirror 60 onto the windshield 64 (freeform mirror 60 and windshield 64 are not shown in FIG. 7b). In preferred embodiments, a distance between the freeform mirror 60 and display 54 is 176 mm. The first outer parameter 62a is preferably reflected off the internal fold mirror 58 at angle β1, as measured from normal N1 extending perpendicularly from a surface of the internal fold mirror 58. In preferred embodiments, angle β1 is between 30 and 50 degrees. The second outer parameter 62b is preferably reflected at angle β2, as measured from normal N2 extending perpendicularly from a surface of the internal fold mirror 58. In preferred embodiments, angle β2 is between 27 and 47 degrees. In a preferred embodiment, the first outer parameter 62a is reflected off the internal fold mirror 58 at a 40-degree angle, and the second outer parameter 62b is reflected at a 37-degree angle.

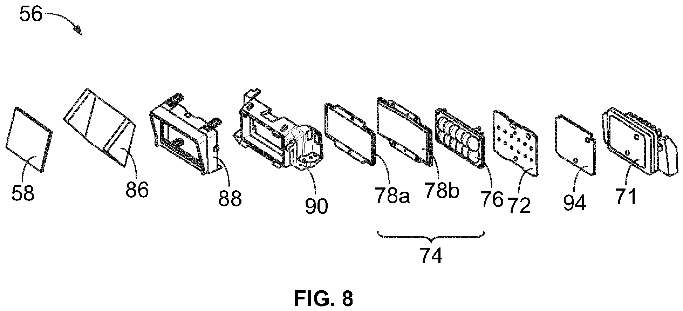

FIG. 8 is an exploded view illustrating additional components that preferably comprise the BLU 56. In addition to the internal fold mirror 58 and plurality of lenses 74, the BLU 56 preferably comprises a fold mirror holder 86, a lens cover 88, a lens holder 90, the light array 72, a thermal sheet 94, and a heat sink 71. The fold mirror holder 86 and lens holder 90 preferably hold the internal fold mirror 58 and plurality of lenses 74 in position within the BLU 56. The thermal sheet 94 preferably acts to vent a surface of the light array 72 which adjoins the heat sink 71, which in turn radiates heat produced by the light array 72 out of the BLU 56. The light array 72 is preferably defined by a PCB assembly comprised of an LED array assembled to a printed circuit board (PCB). In preferred embodiments the LED array is soldiered to the PCB. However, other light assemblies and light arrays 72 are contemplated by this disclosure, such as laser diodes, which may be used with a different set of optical lenses than those disclosed *supra.*

The orientation of the interior fold mirror 58 illustrated in FIGS. 6, 7a, and 7b, results in an advantageously compact PGU 52 that does not extend as far in a horizontal, or longitudinal, direction as does the traditional PGU 52. For instance, in traditional HUDs 10, the PGU 12 is typically 136 mm away from the external fold mirror 18, which is in turn 164 mm away from the freeform mirror 20. In contrast the PGU 52 in HUDs 50 (containing the internal fold mirror 58) is preferably positioned 176 mm from the freeform mirror 60. Other distances between components of the improved HUD 50 are contemplated, but in any event the removal of the external fold mirror 18 removes an element or component of the HUD 10, which, in collaboration with the change in orientation, facilitates a smaller HUD 50 volume.

For instance, in traditional HUDs 10 shown in FIGS. 1-4, the BLU 16 generally extends between 80 and 100 mm in the fore and aft direction along axis AA-AA. A typical BLU 16 extends 92.79 mm along axis AA-AA. But by incorporating the internal fold mirror 58, and removing the external fold mirror 18, the length of BLUs 56 along axis AA-AA in preferred embodiments is reduced by approximately 30 mm, with a fore-aft length of between 50-70 mm. In preferred embodiments, the BLU 56 extends 62.152 mm in the fore-aft direction along axis AA-AA. Moreover, by removing the external fold mirror 18, a HUD volume is reduced from 8 L typical in traditional HUD assemblies 10, to 6.9 L for HUD assemblies 50 with an internal fold mirror 58.

Furthermore, the internal fold mirror 58 utilized in the improved HUD assemblies 50 are smaller than the external fold mirrors 18 utilized in traditional HUD assemblies 10. In traditional HUDs 10, the external fold mirrors 18 are typically trapezoidal in shape, having two base sides and two leg sides, where one base side is 56 mm in length, one base side is 75 mm in length, one leg side is 180 mm in length, and the other leg side is 181 mm in length. Other shapes and sizes are known in the art, but generally the external fold mirrors 18 utilized in traditional HUDs 10 present a mirror with an area around 11,790 mm². In contrast the internal fold mirror 58 utilized in the improved HUD assemblies 50 are preferably rectangular in shape, with a preferred length of 80 mm, a width of 61 mm, and a preferred area of 4,880 mm². Other shapes and sizes are contemplated, but regardless of shape, incorporation of the fold mirror 58 into the PGU 52 facilitates a reduction of the fold mirror size, thereby reducing overall HUD volume.

Incorporation of the internal fold mirror 58 into the BLU 56 thus reduces the back focus and increases the possibility for magnification of the image projected onto a windshield without increasing the HUD 50 volume. By incorporating the internal fold mirror 58 into the PGU 52, and removing the need for an external fold mirror 18, the back focus of the HUD 50 may be reduced to between 406 and 466 mm. In the prior art, magnification of the image reflected on the windshield 24 is generally limited to less than 6 times the size of the image produced by the BLU 16. However, HUDs of the current disclosure can produce a reflected image that is magnified more than 6 times, and in preferred embodiments the image is magnified to 7.5 times the size of the image produced by the BLU.

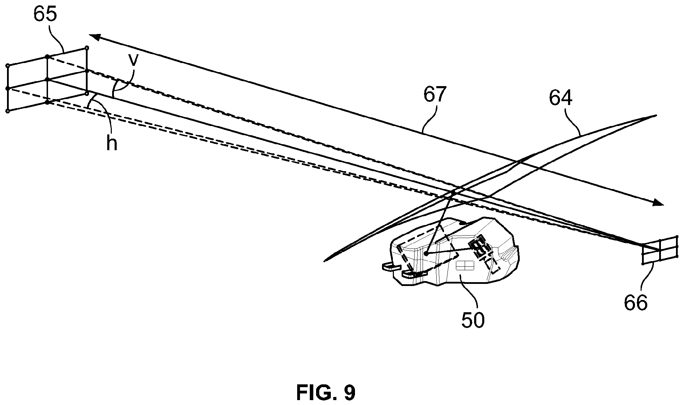

FIG. 9 illustrates a field of view (FoV) of the reflected image, as seen by the user (i.e., a perceived image 65). The size of the perceived image 65 can be described in terms of the FoV in relation to the distance between the perceived image 65 and the user's eye 66. When the image is reflected on the windshield 64, the user preferably sees the image 65 as displayed beyond or behind the windshield 64. The size of the perceived image 65 is based on a horizontal angle h and a vertical angle v, between the user's eye 66 and edges of the perceived image 65. For instance, the HUD 50 may preferably produce an image with a FoV that is 7x3 degrees, where the horizontal angle h is 7 degrees, and a vertical angle v that is 3 degrees. Depending on the size of the vehicle and a distance 67 between the user's eye 66 and the perceived image 65, a 7x3 FoV can result in a number of perceived image sizes.

In the prior art, a HUD 10 with a volume of 8 L, an image distance 27 of 2,900 mm, and a 7x3 FoV, has a perceived image that is magnified 5.5 times the size of the image produced by the BLU 16. Conversely, by removing the external fold mirror 18, and incorporating the internal fold mirror 58, in preferred embodiments a HUD 50 that produces a 7x3 FoV over an image distance 67 of 2,900 mm can have a volume less than 8 L while also magnifying the image 65 more than 5.5 times the size of the image produced by the BLU 56. In preferred embodiments, the HUD 50 with a 7x3 FoV has a HUD volume of 5.5 L and image magnification of 7.5 times the size of the image produced by the BLU 56.

However, this increased magnification also amplifies sunlight that travels retrograde down the light pathway 62. Such light travels through the windshield, or from other ambient sources, and is reflected off the free form mirror 60 to the display 54. Retrograde light can also be reflected back off the display 54 to travel antegrade down the light pathway 62 to reflect off the windshield 64 into the driver's eye 66.

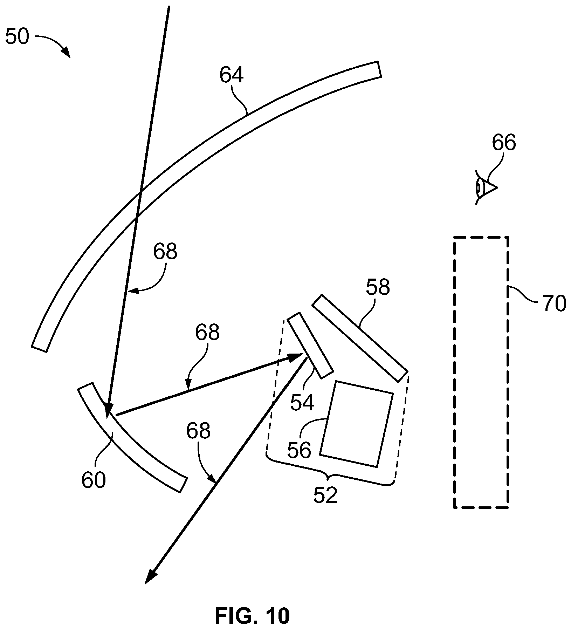

As shown in FIG. 10, however, reflection of sunlight along sunlight pathway 68 into the user's eye 66 can be eliminated by optimizing the back focus length and by orientating the display 54 and freeform mirror 60 such that sunlight 68 is reflected off the display 54 in a downwards trajectory below the freeform mirror 60. This is done by tilting the display 54 in such a manner that the sunlight 68 that reflects onto the display 54 is reflected downward and is directed below the freeform mirror 60, and such that backlight coming from the display 54 is directed straight to the freeform mirror 60 and thence to the windshield and driver/user 66 (the backlight pathway is not shown in FIG. 10). In other words, the display 54 may preferably be positioned at an orientation angle such that the display 54 permits the antegrade light to travel in the antegrade direction along the light pathway 62 from the internal fold mirror 58 to the freeform mirror 60, but where the orientation angle of the display 54 prohibits retrograde light from traveling in the retrograde direction from the display 54 to the freeform mirror 60.

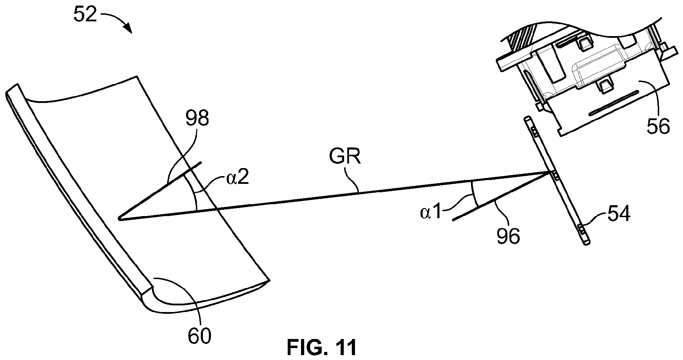

Specifically, in preferred embodiments, the freeform mirror 60 and display 54 are preferably at least 176 mm apart, and as shown in FIG. 11, the display 54 is preferably tilted at a display orientation angle α1 from a central ray path, or Gut Ray GR, extending between the display 54 and freeform mirror 60. In preferred embodiments, the freeform mirror 60 is tilted at a freeform orientation angle α2 from the Gut Ray GR. Orientation angles α1 and α2 are illustrated in FIG. 11 in reference to a Display Normal 96, and a Freeform Normal 98, respectively. The Gut Ray GR extends from a center of the display 54 and a center of the freeform mirror 60. The Display Normal 96 is an axis that extends perpendicularly from the center the display 54. Similarly, the Freeform Normal 98 extends perpendicularly from the center of the freeform mirror 60. The orientation angles α1 and α2 illustrate the amount by which the Gut Ray GR deviates from the Display Normal 96 and Freeform Normal 98. In preferred embodiments, the display orientation angle α1 is between 15° and 20°, while the freeform orientation angle α2 is between 30° and 40°.

Put another way, the Gut Ray GR is preferably angled at least 15° from the Display Normal 96 and the Freeform Normal 98, where the Display Normal 96 and Freeform Normal 98 extend perpendicularly from surfaces of their respective components. The display 54 is thus preferably tilted such that the Gut Ray GR is at least 15° from perpendicular in relation to display 54, and at least 30° from perpendicular in relation to the freeform mirror 60. By positioning the freeform mirror 60 and display 54 in this specific orientation, the sunlight 68 can be reflected off the freeform mirror 60 onto the display 54 in such a way that the sunlight 68 passes underneath the freeform mirror 60 and does not reflect back to the windshield 64 (see FIG. 10).

As noted *supra* removing the exterior fold mirror 18 and optimizing the orientation and spatial relationship between the PGU 52 and the freeform mirror 60 reduces the overall size and volume of the HUD assembly 30, reduces the back focus, and increases the magnification of the image reflected on the windshield 64. It does so in such a way that the risk of sunlight 68 reflection off the display and into a viewer's eye 66 is minimized, and in such a way that the extension of the HUD assembly 50 into the fore-aft direction is reduced. Utilization of a display 54 with high resolution and pixilation also limits the risk of the reflected image becoming grainy after magnification.

Thus, in preferred embodiments, the display 54 has a high resolution to accommodate the shorter back focus. The display 14 in a conventional HUD assembly 10 typically comprises a 3.1 inch thin-film-transistor LCD display ("TFT display"), with an active display surface of 68.4 mm x 40.9 mm, equating to 800 x 480 pixels. In a traditional HUD assembly 10, the display can then be magnified up to five and a half times when reflected onto the windshield 24. Conversely, embodiments in accordance with the current disclosure utilize a smaller display, with high pixel resolution. In a preferred embodiment, the display 54 is 2.6-inch TFT display with an active area of 57.6 mm x 34.56 mm, with 800 x 480 pixels. Thus, improved HUD assemblies 50 may utilize a smaller display 54 with a pixel resolution that is greater, per square millimeter, than that necessary for traditional HUD assemblies 10. This high pixel count enables image magnification without the image becoming "grainy." This ability to increase the magnification also allows for reduction of the back focus, which in turn allows for a smaller, more compact HUD. In other words, by utilizing smaller displays 54 with greater resolution, the display 54 in improved HUD assemblies 50 can be magnified to a greater extent than displays 14 in traditional HUDs 10, facilitating a smaller back focus, and resulting in a smaller HUD 50 volume.

While the invention is described through the above-described exemplary embodiments, modifications to, and variations of, the illustrated embodiments may be made without departing from the inventive concepts disclosed herein. For example, although specific parameter values, such as dimensions, materials, additives and coatings, may be recited in relation to disclosed embodiments, within the scope of the invention, the values of all parameters may vary over wide ranges to suit different applications.

As used herein, including in the claims, the term "and/or," used in connection with a list of items, means one or more of the items in the list, i.e., at least one of the items in the list, but not necessarily all the items in the list. As used herein, including in the claims, the term "or," used in connection with a list of items, means one or more of the items in the list, i.e., at least one of the items in the list, but not necessarily all the items in the list. "Or" does not mean "exclusive or."

Disclosed aspects, or portions thereof, may be combined in ways not listed above and/or not explicitly claimed. In addition, embodiments disclosed herein may be suitably practiced, absent any element that is not specifically disclosed herein. Accordingly, the invention should not be viewed as being limited to the disclosed embodiments.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Representative features are set out in the following numbered clauses, which stand alone or may be combined, in any combination, with one or more features disclosed in the text and/or drawings of the specification:
1. A head up display (HUD) system for use in a vehicle, the HUD comprising:
   a picture generation unit (PGU), the PGU comprising:
      a backlight unit (BLU);
      an internal fold mirror; and
      a display;
   a freeform mirror; and
   a light pathway defined by the PGU and the freeform mirror;
   wherein the HUD is configured to transmit light along the light pathway;
   wherein when light is transmitted along the light pathway, the light emanates and is transmitted from the BLU to the internal fold mirror, then from the internal fold mirror to the display, and then from the display to the freeform mirror.
2. The HUD system of clause 1, further comprising an image exhibited on the display.
3. The HUD system of clause 1 or 2, wherein the light pathway is additionally defined by a target surface, and wherein the image reflected on the display is transmitted along the light pathway from the freeform mirror such that it is reflected upon the target surface.
4. The HUD system of any numbered clause, wherein the target surface is a windshield.
5. The HUD system of any numbered clause, wherein the BLU comprises a light array and a plurality of lenses.
6. The HUD system of any numbered clause, wherein the plurality of lenses comprises a condenser lens and two lenticular lenses.
7. The HUD system of any numbered clause, wherein the light array and plurality of lenses are oriented perpendicularly to the display.
8. The HUD system of any numbered clause, further comprising a target surface and a sunlight pathway, wherein when sunlight is transmitted along the sunlight pathway toward the HUD system and through the target surface, the sunlight is reflected by the display away from the freeform mirror, thereby eliminating retrograde transmission of sunlight along the sunlight pathway.
9. The HUD system of any numbered clause, further comprising a field of view (FoV), an image magnification, and a HUD volume, wherein the image reflected off the target surface has a 7x3 FoV, the HUD volume is less than 8 L, and the image magnification is greater than 5.5.
10. The HUD system of any numbered clause, wherein the HUD volume is 5.5 L, and the image magnification is 7.5.
11. The HUD system of any numbered clause, wherein a resolution of the display is at least 800 x 480 pixels.
12. A head up display (HUD) system for use in a vehicle, the HUD system comprising:
   a picture generation unit (PGU), the PGU comprising:
      a backlight unit (BLU)
      an internal fold mirror; and
      a display comprising an orientation angle;
   a freeform mirror; and
   a light pathway having antegrade and retrograde directions and being defined by the PGU and the freeform mirror;
   wherein the internal fold mirror is positioned along the light pathway between the BLU and the display;
   wherein when an antegrade light is transmitted along the light pathway, the antegrade light emanates and is transmitted from the BLU to the internal fold mirror, then from the internal fold mirror to the display, and then from the display to the freeform mirror;
   wherein the orientation angle of the display permits the antegrade light to travel in the antegrade direction along the light pathway from the internal fold mirror to the freeform mirror, and wherein the orientation angle of the display prohibits a retrograde light from traveling from the display to the freeform mirror.
13. The HUD system of any numbered clause, wherein the BLU comprises at least two lenticular lenses.
14. The HUD system of any numbered clause, wherein the PGU additionally comprises a light array, a condenser lens, and at least one lenticular lens.

## Claims

1. A head up display (HUD) system for use in a vehicle, the HUD comprising:
a picture generation unit (PGU), the PGU comprising:
a backlight unit (BLU);
an internal fold mirror; and
a display;
a freeform mirror; and
a light pathway defined by the PGU and the freeform mirror;
wherein the HUD is configured to transmit light along the light pathway;
wherein when light is transmitted along the light pathway, the light emanates and is transmitted from the BLU to the internal fold mirror, then from the internal fold mirror to the display, and then from the display to the freeform mirror.

2. The HUD system of claim 1, further comprising an image exhibited on the display.

3. The HUD system of claim 1 or claim 2, wherein the light pathway is additionally defined by a target surface, and wherein the image reflected on the display is transmitted along the light pathway from the freeform mirror such that it is reflected upon the target surface.

4. The HUD system of claim 3, wherein the target surface is a windshield.

5. The HUD system of any preceding claim, wherein the BLU comprises a light array and a plurality of lenses.

6. The HUD system of claim 5, wherein the plurality of lenses comprises a condenser lens and two lenticular lenses.

7. The HUD system of claim 5 or claim 6, wherein the light array and plurality of lenses are oriented perpendicularly to the display.

8. The HUD system of any preceding claim, further comprising a target surface and a sunlight pathway, wherein when sunlight is transmitted along the sunlight pathway toward the HUD system and through the target surface, the sunlight is reflected by the display away from the freeform mirror, thereby eliminating retrograde transmission of sunlight along the sunlight pathway.

9. The HUD system of any preceding claim, further comprising a field of view (FoV), an image magnification, and a HUD volume, wherein the image reflected off the target surface has a 7x3 FoV, the HUD volume is less than 8 L, and the image magnification is greater than 5.5.

10. The HUD system of claim 9, wherein the HUD volume is 5.5 L, and the image magnification is 7.5.

11. The HUD system of any preceding claim , wherein a resolution of the display is at least 800 x 480 pixels.

12. The HUD system of any preceding claim, wherein:
the display comprises an orientation angle;
the light pathway has antegrade and retrograde directions;
wherein the internal fold mirror is positioned along the light pathway between the BLU and the display;
wherein when an antegrade light is transmitted along the light pathway, the antegrade light emanates and is transmitted from the BLU to the internal fold mirror, then from the internal fold mirror to the display, and then from the display to the freeform mirror;
wherein the orientation angle of the display permits the antegrade light to travel in the antegrade direction along the light pathway from the internal fold mirror to the freeform mirror, and wherein the orientation angle of the display prohibits a retrograde light from traveling from the display to the freeform mirror.

13. The HUD system of claim 12, wherein the BLU comprises at least two lenticular lenses.

14. The HUD system of claim 12 or claim 13, wherein the PGU additionally comprises a light array, a condenser lens, and at least one lenticular lens.
